# EUROPÄISCHE PATENTSCHRIFT

(11) **EP 1 438 174 B1**
(45) Veröffentlichungstag und Bekanntmachung des Hinweises auf die Patenterteilung: **08.06.2005**
(21) Anmeldenummer: 02801905.7
(22) Anmeldetag: 22.10.2002
(51) Int. Cl.: B29C 45/76

(54) **FORMSCHLIESSEINHEIT FÜR EINE SPRITZGIESSMASCHINE**
MOULD SEALING UNIT FOR AN INJECTION MOULDING MACHINE
UNITE DE FERMETURE DE MOULE POUR MACHINE DE MOULAGE PAR INJECTION

(30) Priorität: 24.10.2001 DE 10151352
(43) Veröffentlichungstag der Anmeldung: 21.07.2004
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2002/011781
(87) Internationale Veröffentlichungsnummer: WO 2003/035361

(56) Entgegenhaltungen:
- EP-A- 0 024 518
- PATENT ABSTRACTS OF JAPAN vol. 1998, no. 1, 30. Januar 1998 (1998-01-30) -& JP 09 254218 A (SUMITOMO HEAVY IND LTD), 30. September 1997 (1997-09-30) in der Anmeldung erwähnt
- PATENT ABSTRACTS OF JAPAN vol. 5, no. 76 (M-69), 20. Mai 1981 (1981-05-20) -& JP 56 025429 A (JAPAN STEEL WORKS LTD:THE), 11. März 1981 (1981-03-11)
- PATENT ABSTRACTS OF JAPAN vol. 17, no. 607 (M-1507), 9. November 1993 (1993-11-09) -& JP 05 185481 A (JAPAN STEEL WORKS LTD:THE), 27. Juli 1993 (1993-07-27)

## Beschreibung

Die Erfindung betrifft eine Formschließeinheit für eine Spritzgießmaschine zur Verarbeitung von Kunststoffen und anderen plastifizierbaren Massen mit Sensormitteln zum Erfassen der Werkzeugsicherungskraft und zumindest der Schließkräfte nach dem Oberbegriff des Anspruches 1 sowie ein Verfahren nach dem Oberbegriff des Anspruches 9.

Eine derartige Formschließeinheit ist z.B. aus EP 0 024 518 A1 bekannt. Dort werden zur Erfassung der Schließ- und Zuhaltekräfte am Abstützelement der Schließeinheit mehrere Verformungsmesseinrichtungen zur Messung der Biegeverformung des Anstützelemenets vorgesehen. Als Verformungsmesseinrichtungen werden auch Dehnmessstreifen vprgesehen, sofern zwischen des Messpunkten weitere Hilfsmittel wie ein Dehnstab vorgesehen wird. Offen bleibt, ob damit sämtliche beim Spritzvorgang auftretenden Kräfte gemessen werden und wie gut die Auflösung des Sensors ist.

In der JP 09 254 218 A werden Dehnungsmessstreifen im Bereich eines Kniehebelmechanismus vorgesehen. Die Anordnung eines Sensors im Antriebsstrang des Kniehebels hat jedoch den Nachteil, dass das Übersetzungsverhältnis des Kniehebels dynamisch mit eingerechnet werden muss. Die Anbindung an einem bewegten Teil mit hohen Beschleunigungskräften, ggf. hohen Temperaturschwankungen und einer mechanischen Belastung auch der Zuleitung, bringt für das Messprinzip erhebliche Nachteile.

Bei weiterhin bekannten, direkt angetriebenen hydraulischen Spritzgießmaschinen kann sowohl die Werkzeugsicherungskraft als auch die Schließkraft/Zuhaltekräft durch den Hydraulikdruck überwacht werden. Dies ist bei Spritzgießmaschinen mit Kniehebelantrieb oder anderen kinematischen Kraftübersetzungsmitteln wie Exzenter oder Schubkurbel nicht möglich. Dort wird die quasistatische Schließkraft und die dynamische Werkzeugsicherungskraft (Formschutzkraft) mit unterschiedlichen Sensoren an unterschiedlichen Plätzen gemessen. Die Fachwelt vertritt dabei die Ansicht, dass es mit üblichen Sensoren nicht möglich ist, die Anforderungen für eine hohe Schließkraft bei gleichzeitiger hoher Auflösung zur Messung einer ausreichend genauen Werkzeugsicherungskraft mit denselben Sensormitteln zu realisieren.

Gängige Sensoren zur Messung der Werkzeugsicherungskraft sind piezoresistive Systeme, Halbleiterdehnungsmessstreifen, die auch geringe Dehnungen sehr gut auflösen. Um das Messefement des Sensors für die Werkzeugsicherungskraft jedoch nicht zu überdehnen, wird der Sensor meist an einem Ort angeordnet, an dem die hohe Schließkraft nicht wirksam wird.

Gängige Sensoren zur Messung der Schließkraft, also auch der Zuhaltekraft, sind Dehnungsmessstreifen-Holmmessringe, Holmmessdübel, piezoelektrische oder piezoresistive Sensoren.

Als Oberflächendehnungssensor ist z.B. der Dehntrafo DSRT 1200 der Baumer Sensopress bekannt. Es handelt sich dabei um einen Obemächendehhungssensor mit integnertem Verstärker für statische Anwendungen. Dieser Dehntrafo besitzt eine mechanische Dehnungsüberhöhung um den Faktor 4. Nach den Angaben auf dem beigefügten Produktblatt ist er für Pressen mit langen Zykluszeiten und zur Gewichtsmessung geeignet als auch für die Dehnungsmessung an steifen Strukturen geeignet. Dies schließt grundsätzlich die Eignung für Spritzgießmaschinen mit kürzen Zykluszeiten aus.

Ausgehend von diesem Stand der Technik liegt der vorliegenden Erfindung die Aufgabe zugrunde, ein einfaches, kostengünstiges und dennoch zuverlässiges Messsystem zur Verfügung zu stellen, das sowohl die Werkzeugsicherungskraft als auch die Schließkraft ausreichend genau erfassen kann.

Diese Aufgabe wird durch eine Formschließeinheit mit den Merkmalen des Anspruches 1 als auch durch ein Verfahren mit den Merkmalen des Anspruches 9 gelöst.

Entgegen der Auffassung der Fachkreise wird ein hoch auflösender Sensor verwendet, also ein Sensor, der durchaus auch geeignet ist, die Werkzeugsicherungskraft ausreichend genau zu bestimmen. Dennoch ist derselbe Sensor auch dafür geeignet, die Schließkräfte mit ein und demselben Messbereich zu erfassen. Die Eignung für beide Zwecke wird unter anderem durch den Anbringungsort des Sensors, nämlich im Bereich der Abstützung der Schließeinrichtung erreicht. Er befindet sich damit an einem im wesentlichen nicht bewegten Teil der Schließeinheit, so dass er zumindest dynamischen Einflüssen nicht ausgesetzt ist. Die Anbringung hat den Vorteil, dass an diesem Teil mit geringer mechanischer Dehnung außer einer guten Zugänglichkeit auch eine deutlich geringere mechanische Belastung auftritt. Messfehler bei der Messung der Formsicherungskraft, bedingt durch fehlende Plattenparallelität oder einseitig eingespannte Spritzteile werden durch die Lage des Sensors minimiert.

Weitere Vorteile ergeben sich aus den Unteransprüchen.

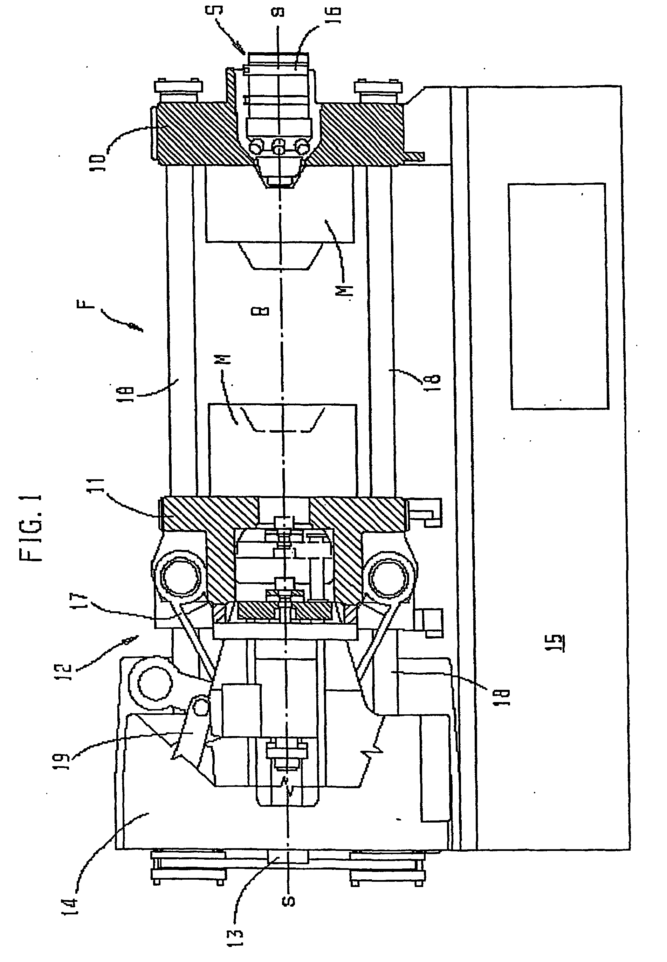

Im folgenden wird die Erfindung anhand eines in der einzigen Figur dargestellten Ausführungsbeispieles näher erläutert. Die Figur zeigt eine Formschließeinheit einer Spritzgießmaschine zur Verarbeitung von Kunststoffen in Seitenansicht teilweise geschnitten.

Die Figur zeigt die Formschließeinheit F einer Spritzgießmaschine zur Verarbeitung von Kunststoffen und anderer plastifizierbarer Massen wie keramischer oder pulvriger Massen in einer Seitenansicht. Auf einem Maschinenfuß 15 befindet sich ein stationärer Formträger 10, der gemeinsam mit einem beweglichen Formträger 11 einen Formspannraum R zur Aufnahme einer Spritzgießform M bildet. Wenigstens eine Schließeinrichtung 12 ist zum zyklischen Öffnen, Zufahren und Schließen der Spritzgießform M vorgesehen. Durch die Betätigung der Antriebseinheit 19 wird der bewegliche Formträger 11 in Richtung auf den stationären Formträger 10 bewegt, wobei nach Formschluss, also nach Anliegen der beiden Pormhälften aneinander die Schließkraft aufgebracht wird. Dies erfolgt im Ausführungsbeispiel durch eine Schließeinrichtung, grundsätzlich ist es jedoch - wie im Stand der Technik bekannt - möglich, ein serielles Schließen durchzuführen, d.h. zunächst die Form mit einer Schließeinrichtung zu schließen und dann mit einer zweiten die Schließkraft aufzubringen.

Die Schließeinrichtung 12, die hier durch einen Kniehebelmechanismus, vorzugsweise einen Fünf-Punkt-Kniehebel gebildet ist, wird durch den Antrieb 19 betätigt. Bei Betätigung stützt sich die Schließeinrichtung 12 an der Abstützung ab, die im Ausführungsbeispiel durch das Abstützelement 14 gebildet ist.

Sensormittel sind in Form des Sensors 13 zum Erfassen der Werkzeugsicherungskraft und zumindest der beim Schließen der Spritzgießform auftretenden Schließkräfte vorgesehen. Bei der Werkzeugsicherungskraft ist sicher zu stellen, dass das Werkzeug beim Zufahren nicht beschädigt wird oder plötzlich Widerstände auftreten, die zu einem Stoppen des Schließvorgangs führen müssen. Die Schließkräfte zu erfassen hingegen ist erforderlich, um eine entsprechende Qualität der Spritzteile sicher zu stellen. Ist die Form geschlossen, wird über die Spritzgießeinheit S, von der lediglich die Düse und der Plastifizierzylinder 16 rechts zu erkennen sind, plastifizierter Kunststoff in den Formhohlraum der Spritzgießform eingespritzt.

Das Sensormittel zur Erfassung der Werkzeugsicherungskraft als auch der Schließkräfte ist wenigstens ein hoch auflösender Oberflächendehnungssensor, der im folgenden als Sensor 13 angesprochen wird. Dieser Sensor ist so hoch auflösend, dass er die Werkzeugsicherungskraft zuverlässig und ausreichend genau erfassen kann. Um beides möglichst ungestört zu realisieren, wird der Sensor an der Abstützung der Schließeinrichtung 12 vorzugsweise zentral in der Spritzachse s-s angeordnet. Andere Anordnungen sind möglich, wenn das Spannungsfeld bekannt ist, um ggf. eine Rückrechnung auf die Spritzachse s-s vorzunehmen. Ebenso ist es möglich, mehrere Sensoren vorzusehen, sofern erfindungsgemäß sichergestellt ist, dass sie sowohl die Werkzeugsicherungskraft als auch die Schließkraft erfassen können.

Im Ausführungsbeispiel selbst wird als Sensor ein einziger Sensor 13 zur Erfassung sämtlicher Kräfte eingesetzt. Der Sensor kann dabei mit einem einzigen Messbereich über den gesamten Kraftbereich messen. Da der Messbereich des Sensors damit auf die Schließkraft bzw. Zuhaltekraft ausgelegt ist, geht folglich das Signal der Werkzeugsicherungskraft zu keinem Zeitpunkt der Werkzeugbewegung in die Sättigung. Mit anderen Worten, kann der Anwender für den Parameter der programmierbaren Sicherungskraft einen Wertebereich bis zur Größe der maximalen Schließkraft zulassen. Eine Messbereichsumschaltung ist also nicht erforderlich. Dieser statisch messende Sensor 13 wird zentral am Abstützelement 14 der Formschließeinheit F angeordnet. Das Abstützelement 14 liegt bei der in der Figur dargestellten Drei-Platten-Maschine aus Sicht des stationären Formträgers 10 hinter dem beweglichen Formträger 11. Das Abstützelement 14 ist über Kraftübertragungsmittel mit dem stationären Formträger 10 verbunden. Die Kraftübertragungsmittel sind im Ausführungsbeispiel Führungsholme 18, die zugleich der Führung des beweglichen Formträgers dienen. Statt dessen kann ein Kraftübertragungsmittel z.B. in Form eines C-Bügels oder ähnlicher Vorrichtungen vorgesehen werden, mit denen die Kräfte um den Formspannraum R herumgeleitet werden. Alternativ kann in zeichnerisch nicht dargestellter Ausführungsform das erfinderische Prinzip an einer Zwei-Platten-Maschine verwendet werden, bei der der stationäre Formträger zugleich das Abstützelement für die Schließeinrichtung bildet und z.B. der bewegliche Formträger auf den stationären Formträger 10 hin gezogen wird.

Mit dem Sensor 13 lässt sich sowohl die Schließkraft als auch die Werkzeugsicherungskraft messen. Die indirekte Kraftmessung liefert ein Signal proportional zur gewünschten Messgröße. Der speziell auf die Anwendung abgestimmte Dehnungsmessstreifensensor arbeitet mit einer mechanischen Überhöhung bzw. Verstärkung der Dehnung. Es handelt sich vorzugsweise um einen Dehntrafo. Der Messbereich wird so gewählt, dass bei maximaler Schließkraft ca. 80% bis 90% des maximalen Signalhubs erreicht wird. Die minimal programmierbare Formschutzkraft ist im wesentlichen durch die Qualität der Signalübertragung und die Auflösung der nachgeschalteten Signalauswertung begrenzt. Üblicherweise reicht jedoch diese Auflösung, um auch die Werkzeugsicherungskraft ausreichend genau zu erfassen.

Der Einbauort des Sensors 13 an einem nicht bewegten Teil mit geringer mechanischer Dehnung bringt zunächst eine gute Zugänglichkeit als auch eine deutlich geringere mechanische Belastung. Messfehler bei der Messung der Werkzeugsicherungskraft, bedingt durch fehlende Plattenparallelität oder einseitig eingespannte Spritzteile werden durch die zentrale Lage des Sensors minimiert. Da ein Sensor für den gesamten Bereich verwendet wird, kann auch die Werkzeugsicherungskraft vom Anwender beliebig programmiert werden.

Durch die mechanische Dehnungsüberhöhung des Sensors kann bei der nachgeschalteten Verstärkerschaltung auf eine Reset-Schaltung zur Kompensation der Drift von Zyklus zu Zyklus verzichtet werden. Ein Reset der Messkette würde nämlich für das zyklische Messen der quasistatischen Schließkraft einen kraftlosen Zustand über die für ein Reset erforderliche Zeit erfordern. Diese Zeit umfasst zumindest die Reset-Zeit des Verstärkers, in der Regel einige Millisekunden, sowie die Zeit zum Ausschwingen des Systems, die wiederum abhängig ist von der Systemsteifigkeit und der Dynamik im Zyklus. Dies würde sich in einer Verlängerung der Zykluszeit niederschlagen. Üblicherweise ist ein derart kraftloser Zustand bei einer zyklisch arbeitenden Maschine wie der Formschließeinheit einer Kunststoffspritzgießmaschine zudem nicht zu erreichen.

Die Einbaulage des Sensors 13 an der Abstützung der Schließeinrichtung 12 ist normalerweise günstig in bezug auf die Minimierung der Messfehler, vorzugsweise für die Messung der Formsicherungskraft zu wählen. Ferner sollte sie günstig gewählt werden im Hinblick auf die mechanische und thermische Belastung des Sensors 13 sowie im Hinblick auf seine Zugänglichkeit.

### Liste der Bezugszeichen (kein Bestandteil der Anmeldeunterlagen)

- 10: stationärer Formträger
- 11: beweglicher Formträger
- 12: Schließeinrichtung
- 13: Sensor
- 14: Abstützelement
- 15: Maschinenfuß
- 16: Plastifizierzylinder
- 17: Kniehebel
- 18: Holm
- 19: Antrieb
- F: Formschließeinheit
- M: Spritzgießform
- R: Formspannraum
- S: Spritzgießeinheit
- s-s: Spritzachse

## Patentansprüche

1. Formschließeinheit für eine Spritzgießmaschine zur Verarbeitung von Kunststoffen und anderen plastifizierbaren Massen mit
- einem stationären Formträger (10), der gemeinsam mit einem beweglichen Formträger (11) einen Formspannraum (R) zur Aufnahme einer Spritzgießform (M) bildet,
- wenigstens einer Schließeinrichtung (12) zum zyklischen Öffnen, Zufahren und Schließen der Spritzgießform (M) unter Bewegung des beweglichen Formträgers (11) und zur Aufbringung der Schließkraft,
- einer Abstützung für die Schließeinrichtung (12),
- einem Dehnungssensor zum Erfassen zumindest der beim Schließen der Spritzgießform auftretenden Schließkräfte, wobei der Dehnungssensor an der Abstützung der Schließeinrichtung (12) angeordnet ist,
**dadurch gekennzeichnet, dass** der Dehnungssensor zur Erfassung sowohl der Werkzeugsicherungskraft als auch der Schließkräfte durch einen hoch auflösenden Oberflächendehnungssensor (13) gebildet ist, der nur einen Messbereich zur Erfassung der Kräfte aufweist.

2. Förmschließeinheit nach Anspruch 1, **dadurch gekennzeichnet, dass** der einzige Sensor (13) zentral an der Abstützung der Schließeinheit angeordnet ist.

3. Formschließeinheit nach einem der Ansprüche 1 oder 2, **dadurch gekennzeichnet, dass** die Abstützung ein aus Sicht des stationären Formträgers (10) hinter dem beweglichen Formträger (11) angeordnetes Abstützelement (14) ist, das über Kraftübertragungsmittel mit dem stationären Formträger (10) in Verbindung steht.

4. Formschließeinheit nach einem der Ansprüche 1 bis 3, **dadurch gekennzeichnet, dass** die Abstützung durch den stationären Formträger (10) gebildet ist.

5. Formschließeinheit nach einem der vorhergehenden Ansprüche, **dadurch gekennzeichnet, dass** die Schließsinrichtung (12) ein Kniehebelmechanismus ist.

6. Formschließeinheit nach einem der vorhergehenden Ansprüche, **dadurch gekennzeichnet, dass** der Sensor (13) ein statisch messender Sensor mit mechanischer Überhöhung ist.

7. Formschließeinheit nach Anspruch 6, **dadurch gekennzeichnet, dass** der Sensor (13) ein Dehntrafo ist.

8. Formschließeinheit nach einem der vorhergehenden Ansprüche, **dadurch gekennzeichnet, dass** die maximale Schließkraft 80% bis 90% des Messbereichs des Sensors (13) beträgt.

9. Verfahren zur Erfassung der Kräfte an einer Formschließeinheit mit einem Dehnungssensor nach einem der vorhergehenden Ansprüche, **dadurch gekennzeichnet, dass** der hochauflösende, an der Abstützung der Schließeinrichtung (12) angeordnete Oberflächendehnungssensor (13) mit mechanischer Überhöhung und ohne Reset mit nur einem Messbereich misst.

## Claims

1. Mould closing unit for an injection moulding machine for the processing of plastics materials and other plasticisable substances, said mould closing unit comprising
- a stationary mould carrier (10), which together with a movable mould carrier (10) forms a mould clamping space (R) for the accommodation of an injection mould (M),
- at least one closing device (12) for the cyclical opening, supplying and closing of the injection mould (M) by moving the movable mould carrier (11) and for the applying of the closing force,
- a support for the closing device (12),
- a strain sensor for detecting at least the closing forces occurring when the injection mould is closed wherein the strain sensor is disposed on the support of the closing device (12),
**characterised in that** the strain sensor for detecting both the mould securing force and the closing forces is one high resolution surface strain sensor (13) that comprises only one measuring range for detecting the forces.

2. Mould closing unit according to claim 1, **characterised in that** the one single sensor (13) is disposed centrally on the support of the mould closing unit.

3. Mould closing unit according to one of claims 1 or 2, **characterised in that** the support is a supporting element (14) which is disposed behind the movable mould carrier (11), when viewed from the stationary mould carrier (10), which supporting element (14) is connected to the stationary mould carrier (10) via force transferring means.

4. Mould closing unit according to one of claims 1 to 3, **characterised in that** the support is formed by the stationary mould carrier (10).

5. Mould closing unit according to one of the preceding claims, **characterised in that** the closing device (12) is a toggle mechanism.

6. Mould closing unit according to one of the preceding claims, **characterised in that** the sensor (13) is a statically measuring sensor with mechanical amplification.

7. Mould closing unit according to claim 7, **characterised in that** the sensor (13) is a strain link or strain transformer.

8. Mould closing unit according to one of the preceding claims, **characterised in that** the maximum closing force is 80% to 90% of the measuring range of the sensor (13).

9. Method for detecting the forces on a mould closing unit with a strain sensor according to one of the preceding claims, **characterised in that** the high resolution surface strain sensor (13), which is disposed on the support of the closing device (12), measures with mechanical amplification and with no reset and with only one measuring range.

## Revendications

1. Unité de fermeture de moule pour une machine de moulage par injection pour le traitement de matières plastiques et d'autres masses plastifiables, comportant
- un porte-moule fixe (10) qui constitue, conjointement avec un porte-moule mobile (11), un espace de serrage de moule (R) destiné à loger un moule d'injection (M),
- au moins un dispositif de fermeture (12) pour ouvrir, faire se mettre en position de fermeture et fermer cycliquement le moule d'injection (M) avec déplacement du porte-moule mobile (11) et pour appliquer la force de fermeture,
- un appui pour le dispositif de fermeture (12),
- un capteur d'allongement pour détecter au moins les forces de fermeture survenant lors et pendant de la fermeture du moule d'injection, le capteur d'allongement étant situé sur l'appui du dispositif de fermeture (12),
**caractérisée en ce que** le capteur d'allongement est réalisé pour détecter non seulement la force de blocage de l'outil, mais aussi les forces de fermeture au moyen d'un capteur d'allongement de surface haute résolution (13) qui ne présente qu'une plage de mesure pour la détection des forces.

2. Unité de fermeture de moule selon la revendication 1, **caractérisée en ce que** l'unique capteur (13) est situé centralement sur l'appui de l'unité de fermeture.

3. Unité de fermeture de moule selon l'une des revendications 1 ou 2, **caractérisée en ce que** l'appui est un élément d'appui (14) situé derrière le porte-moule mobile (11), du point de vue du porte-moule fixe (10), lequel élément est relié au porte-moule fixe (10) par l'intermédiaire de moyens de transmission de force.

4. Unité de fermeture de moule selon l'une des revendications 1 à 3, **caractérisée en ce que** l'appui est constitué par le porte-moule fixe (10).

5. Unité de fermeture de moule selon l'une des revendications précédentes, **caractérisée en ce que** le dispositif de fermeture (12) est un mécanisme de genouillère.

6. Unité de fermeture de moule selon l'une des revendications précédentes, **caractérisée en ce que** le capteur (13) est un capteur mesurant statiquement avec augmentation mécanique.

7. Unité de fermeture de moule selon la revendication 6, **caractérisée en ce que** le capteur (13) est un transformateur d'allongement.

8. Unité de fermeture de moule selon l'une des revendications précédentes, **caractérisée en ce que** la force de fermeture maximale s'élève à 80 % à 90 % de la plage de mesure du capteur (13).

9. Procédé pour détecter les forces au niveau d'une unité de fermeture de moule avec un capteur d'allongement selon l'une des revendications précédentes, **caractérisé en ce que** le capteur d'allongement de surface (13) haute résolution, situé sur l'appui du dispositif de fermeture (12), mesure avec une augmentation mécanique et sans reset avec une plage de mesure seulement.
